# EUROPÄISCHE PATENTANMELDUNG

(11) **EP 2 039 844 A2**
(43) Veröffentlichungstag der Anmeldung: **25.03.2009**
(21) Anmeldenummer: 08016350.4
(22) Anmeldetag: 17.09.2008
(51) Int. Cl.: E04C 2/52, F28D 20/02

(54) **Vorgefertigtes Verbundplattenelement zum Klimatisieren von Räumen**

(30) Priorität: 17.09.2007 DE 202007012999 U
(71) Anmelder: Ilkazell Isoliertechnik Zwickau GmbH, 08066 Zwickau (DE)
(72) Erfinder: Kehle, Steffen, 08056 Zwickau (DE); Kehle, Gert, 08064 Zwickau (DE)
(74) Vertreter: Auerbach, Bettina

(57) **Zusammenfassung**

Die Erfindung betrifft ein vorgefertigtes Verbundplattenelement zum Klimatisieren von Räumen mit einer Trägerplatte und unter Verwendung von PCM-Wärmespeichermaterial (PCM = Phase Change Material), einem Latentwärmespeichermedium, welches über mikroverkapselte Wachse ein Wärmespeichervolumen besitzt und in einem temperaturbedingten Phasenwechsel diese gespeicherte Wärme wieder abgibt.

Der Erfindung liegt die Aufgabe zugrunde, ein vorgefertigtes sich selbst tragendes Montagebauelement zu schaffen, welches mit einem passiven Kühlsystem aber auch mit einem dieses System unterstützenden aktiven Kühlsystem ausgerüstet ist. Der Aufbau dieses Montagebauelementes soll dabei den Anforderungen an Isolier-, Schall- und Feuerschutz im Bauwesen für den Innenausbau gerecht werden.

Erfindungsgemäß besteht eine Trägerplatte (1) aus einem selbsttragenden Wärmeisoliermaterial, wobei zwischen dieser und der das PCM-Wärmespeichermedium aufweisenden über das Verbundelement durchgängig angeordneten Schicht (2) ein fester unlösbarer Verbund (3) besteht.

## Beschreibung

Die Erfindung betrifft ein vorgefertigtes Verbundplattenelement zum Klimatisieren von Räumen mit einer Trägerplatte und unter Verwendung von PCM-Wärmespeichermaterial (PCM = Phase Change Material), einem Latentwärmespeichermedium, welches über mikroverkapselte Wachse ein Wärmespeichervolumen besitzt und in einem temperaturbedingten Phasenwechsel diese gespeicherte Wärme wieder abgibt.

Das PCM-Wärmespeichermaterial hat sich bereits seit Jahren in der Praxis bewährt und vielfaltige Einsatzmöglichkeiten gefunden.
Auch in der Schaffung von Materialien für die Raumklimagestaltung hat es bereits Anwendung gefunden.
So beschreibt die EP 1 703 033 A2 eine Bautafel für den Innenbereich zum Installieren gegen eine Decke oder eine Wand oder den Einbau in eine Wand oder Decke, wobei die Bautafel aus einer Fronttafel und einem daran angeordneten Wärmespeichermaterial besteht. Die Fronttafel ist aus Metall und weist Perforationen auf Das PCM-Material dient dem Speichern von Wärme zu einem ersten Zeitpunkt und dem wieder Freigeben dieser Wärmeenergie zu einem späteren Zeitpunkt infolge des stattfindenden Phasenwechsels des PCM-Materials. Die Anordnung der perforierten Metallfronttafel erfolgt dabei zum Raum hin, wobei das PCM-Wärmespeichermaterial zur Decke oder Wand des Raumes angeordnet ist. Es soll erreicht werden, dass die im Raum vorhandene Wärme oder Kälte über die Metallfronttafel auf das PCM-Material einwirkt und dort den entsprechenden Speicherprozess und/oder Phasenwechsel bewirkt. Durch die Metallfronttafel als guter Wärmeleiter soll auch die Abgabe der entsprechenden freigegebene Wärme oder Kälte an den Raum unterstützt werden. Diese Lösung hat den Nachteil, dass hierbei die in der Wand gespeicherte Wärme oder Kälte nicht berücksichtigt und somit keine effektive Klimatisierung des Raumes erfolgen kann. Es ist bekannt, dass sich vor allem die Außenwände eines Gebäudes am Tag bei Sonneneinstrahlung stark aufheizen.

Bei der Anordnung eines PCM-Materials an dieser Wand im Inneren des Gebäudes erfolgt die Wärmeabstrahlung in das Innere des Gebäudes durch die aufgeheizte Wand und das Einwirken der Wärme auf das PCM-Material. Aber auch vom Innenraum, der sich Nachts abkühlt, würde diese abgekühlte Temperatur auf das PCM-Material einwirken, so dass keine effektive Wirkungsweise des PCM-Materials erfolgen kann. Die Beeinflussung bei einer derartigen Konstruktion erfolget beidseitig und gegensätzlich.

Der Erfindung liegt die Aufgabe zugrunde, die Nachteile des Standes der technik zu überwinden und ein vorgefertigtes sich selbst tragendes Montagebauelement zu schaffen, welches mit einem passiven Kühlsystem aber auch mit einem dieses System unterstützenden aktiven Kühlsystem ausgerüstet ist. Der Aufbau dieses Montagebauelementes soll dabei den Anforderungen an Isolier-, Schall- und
Feuerschutz im Bauwesen für den Innenausbau gerecht werden. Desweiteren soll das Montagebauelement als Einlegerplatte für herabgehängte Deckenkonstruktionssysteme wie auch für die Montage einer Decke geeignet sein.

Erfindungsgemäß wird die Aufgabe durch die Merkmale des Anspruchs 1 gelöst, wobei die vorteilhaften Ausgestaltungen in den Unteransprüchen beschrieben sind.
Danach besteht ein vorgefertigtes Verbundplattenelement zum Klimatisieren von Räumen aus einer Trägerplatte und einer ein PCM-Wärmespeichermedium aufweisenden Schicht. Die Trägerplatte besteht erfindungsgemäß aus einem selbsttragenden Wärmeisoliermaterial wobei zwischen dieser und einer das PCM-Wärmespeichermedium aufweisenden und über das Verbundelement durchgängig angeordneten Schicht ein fester unlösbarer Verbund besteht. Es ist auch möglich, dass bei dem vorgefertigtes Verbundplattenelement zwischen der selbstragenden wärmeisolierenden Trägerplatte und einer Schicht mit integriertem PCM-Wärmespeichermedium ein Kapillarrohrsystem mit Anschlusselementen für den Anschluss an das Versorgungsleitungssystems angeordnet ist.

Vorteilhaft ist auch die Ausbildung der PCM-Wärmespeichermedium-Schicht selbst als Trägerplatte an welcher ein Kapillarrohrsystem mit den Anschlusselementen für den Anschluss an das Versorgungsleitungssystems fest verbunden angeordnet ist. Dabei sollte das Basismaterial der Trägerplatte, in welches das PCM-Wärmespeichermedium eine stabile Platte ausbilden können. Als vorteilhaft hat sich der Einsatz von Gips als Basismaterial für die Trägerplatte erwiesen.
Um als Montagebausatz für eine Deckenplattenkonstruktion einsatzfähig zu sein, weist das Verbundplattenelement vorteilhafter weise die entsprechenden Rastermaßgrößen auf
Bei Einsatz des Verbundplattenelementes für eine individuelle Deckenkonstruktion oder ein zusätzlich an einer vorhandenen Deckenkonstruktion angeordnetes Kühlsegel weist das Verbundplanenelement individuelle Maße dieser Deckenkonstruktion oder einer Kühlsegelkonstruktion auf.
Bei größeren Abmessungen des vorgefertigten Verbundplattenelementes weist dieses zum Verhindern des nachträglichen Deformierens des Verbundplattenelementes rückseitig eine Schutzschicht bzw. Schutzplatte auf, welche vorzugsweise als Metallplatte ausgebildet ist.
Zur Verbesserung der Montagefähigkeit des vorgefertigten Verbundplatteneiementes sind in diesem Verstärkungsprofile für die Befestigung von Aufnahmevorrichtungen integriert, welche wiederum der Aufnahme der Montage-Befestigungselemente dienen.
Zum Herstellen einer geschlossenen Deckenkonstruktion weist die Schicht aus PCM-Wärmespeichermedium einen Überstand zur dahinter angeordneten dämmenden Tragschicht und/oder dem angeordneten Kapillarrohrsystem wenigstens einseitig auf, welcher durch eine Rahmenkonstruktion versteift ausgebildet ist.
Der feste Verbund zwischen isolierender Trägerplatte , der Schicht mit PCM-Wärmespeichermedium, dem Kapillarrohrsystem, den Verstärkungsprofilen, der versteifenden Rahmenkonstruktion für den gebildeten Überstand und/oder der zusätzlich angeordneten Schutzplatte erfolgt durch die Anordnung einer Klebeschicht zwischen diesen.
Es besteht auch die Möglichkeit, dass zwischen dem Kapillarrohrsystem und der Schicht mit PCM-Wärmespeichermedium eine Klebeschicht angeordnet ist und dass die Trägerplatte daran und nachträglich mittels unter Druck durchgeführten Verschäumprozess angeordnet ist.
Wichtig ist, dass die angeordneten Klebeschichten immer aus einem wärmeleitfähigen Kleber bestehen.

Es besteht auch die Möglichkeit, dass als Verbund eine Schicht aus Vergussmasse angeordnet wird, welche einerseits das Kapillarrohrsystem fest in sich aufnimmt und fixiert und zum anderen einen festen Verbund zwischen der Trägerplatte und der Sichtflächenausbildung oder einer dazwischen angeordneten Schicht aus PCM- Latentwärmespeichermaterial bildet. Dadurch besteht die Möglichkeit den Effekt des Latentwärmespeichermediums zu verstärken und gezielter für die Gestaltung einer Raumklimatisierung energieeffizient zu nutzen.

Als vorteilhaft hat sich herausgestellt, dass für bestimmte Einsatzfälle
die PCM-Wärmespeichermedium-Schicht an der der Kapillarrohranordnung gegenüberliegenden Seite als dekorative Sichtfläche ausgebildet ist Dadurch können nachträgliche Dekorarbeiten bei der Montage vor Ort vermieden werden.

Mit den so ausgebildeten Verbundplattenelementen wurde eine Lösung geschaffen, die es ermöglicht, dass sowohl passive als auch aktive Klimatisierungssysteme miteinander kombiniert und in einem vorgefertigten Verbundplattenelement zum Einsatz gebracht werden und damit deren Effekte effizienter genutzt können. Dennoch besteht die Möglichkeit einer schnellen Montage dieser Verbundplattenelemente, da alle notwendigen Anschlüsse für die aktive Kühle mit integriert sind.

Die Erfindung soll nachstehend mit Ausführungsbeispielen näher erläutert werden.

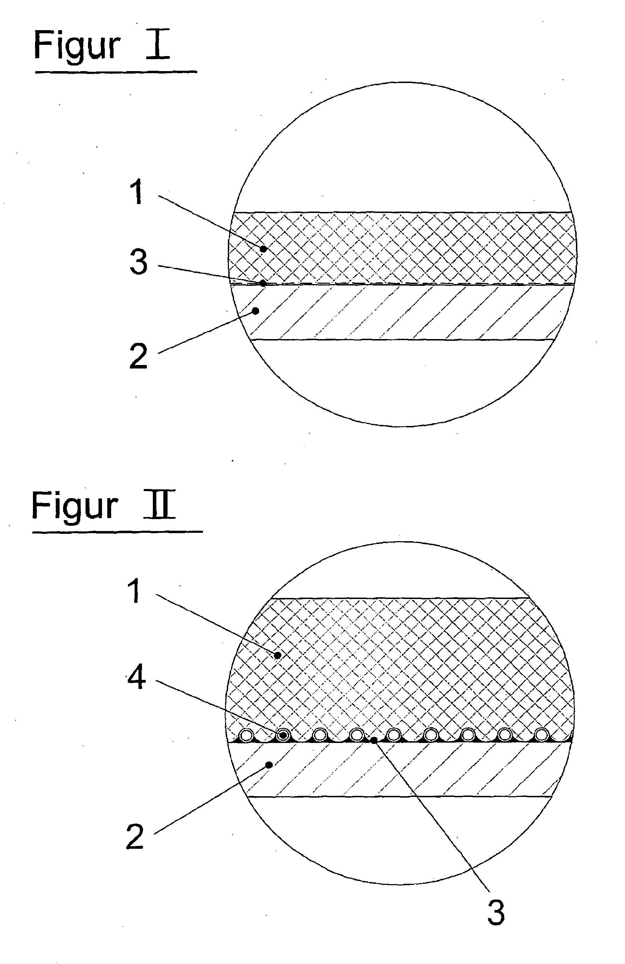

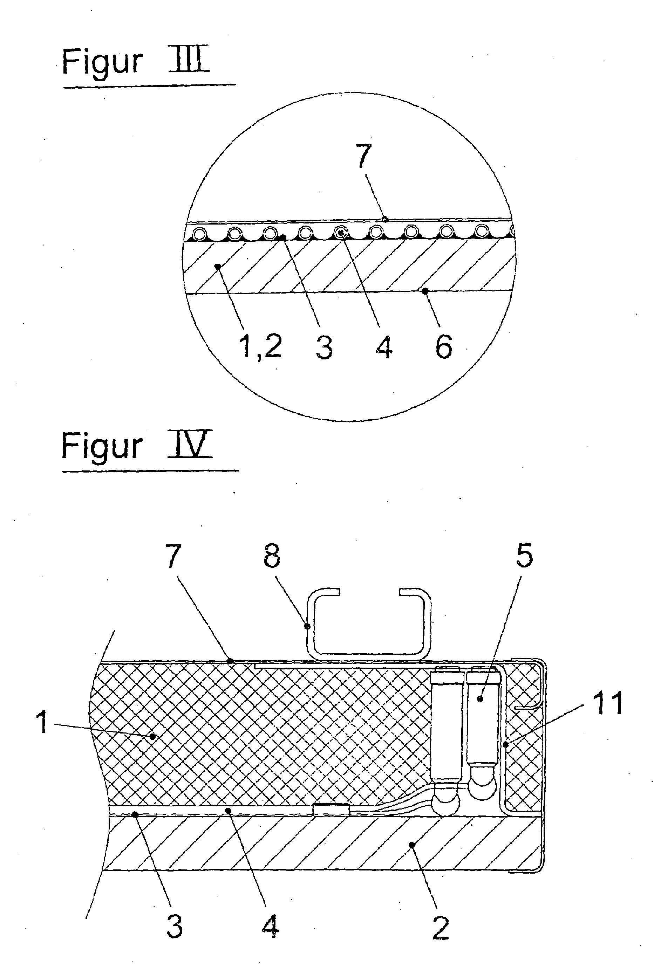

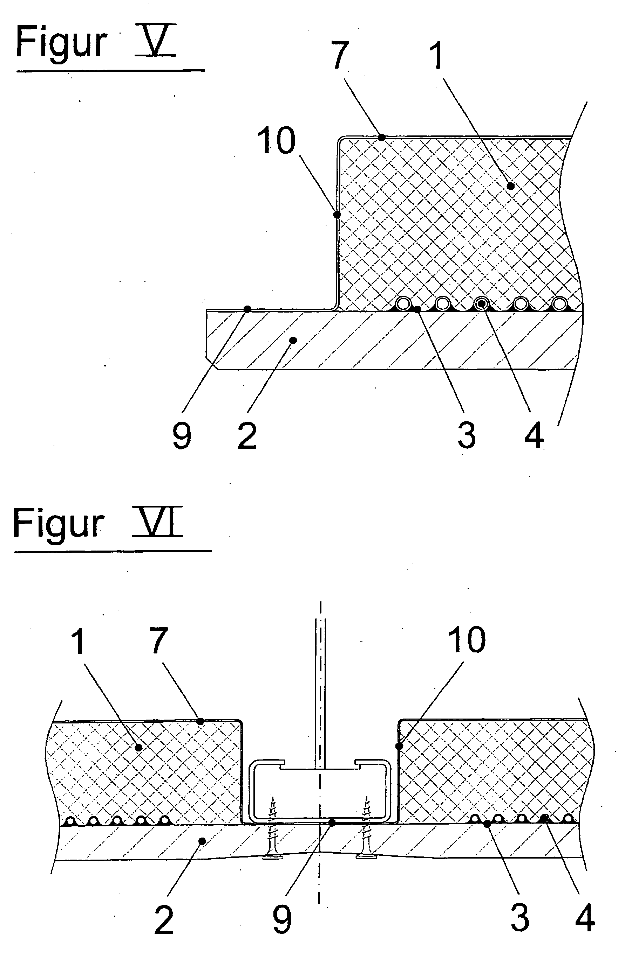

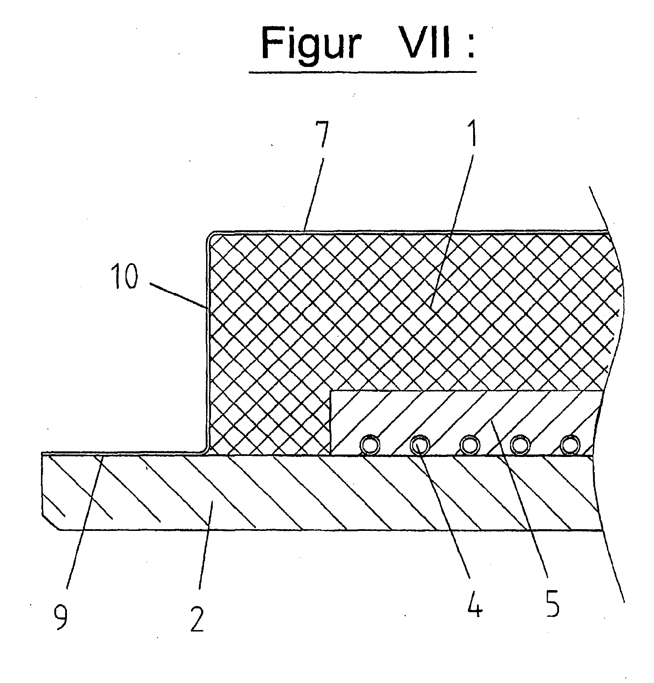

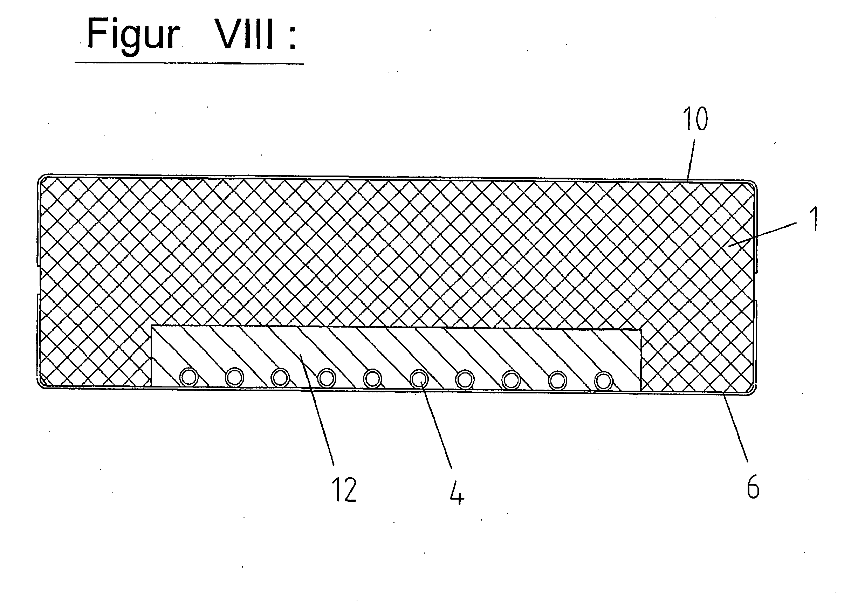

In der beigefügten Zeichnung zeigen
- Fig. I: eine schematische Schnittdarstellung eines Verbundplatten-Elementes mit einer wärmeisolierenden Trägerplatte und einer Schicht mit integriertem PCM-Wärmespeichermedium;
- Fig. II: eine schematische Schnittdarstellung eines Verbundplatten-Elementes mit einer wärmeisolierenden Trägerplatte und einer Schicht mit integriertem PCM-Wärmespeichermedium und einem zwischen beiden angeordnetem Kapillarrohrsystem;
- Fig. III: eine schematische Schnittdarstellung eines Verbundplatten-Elementes mit einer Trägerplatte mit gleichzeitig integriertem PCM-Wärmespeichermedium und einer Schutzschicht, wobei zwischen beiden ein Kapillarrohrsystem angeordnet ist;
- Fig. IV: eine schematische Schnittdarstellung eines Verbundplatten-Elementes mit einer wärmeisolierenden Trägerplatte und einer Schicht mit integriertem PCM-Wärmespeichermedium, einem dazwischen angeordnetem Kapillarrohrsystem mit dazugehörigen Anschlusselementen sowie Verstärkungselementen und Aufnahmen für die Befestigungselemente;
- Fig. V: eine schematische Schnittdarstellung eines Verbundplattenelementes mit einer wärmeisolierenden Trägerplatte und einer Schicht mit integriertem PCM-Wärmespeichermedium, einem dazwischen angeordnetem Kapillarrohrsystem sowie einer Rahmenkonstruktion für den Überstand.
- Fig. VI: eine schematische Schnittdarstellung einer Anordnung von zwei Verbundplattenelemente als Stossverbindung am Überstand mit Konstruktionsvorrichtungen für die Befestigung der beiden Verbundplattenelemente;
- Fig. VII: eine schematische Schnittdarstellung eines Verbundplattenelementes mit einer wärmeisolierenden Trägerplatte und einer Schicht mit integriertem PCM-Wärmespeichermedium, einem dazwischen in einer Ausnehmung der Trägerplatte angeordnetem Kapillarrohrsystem, welches in einer Vergussmasse eingebettet ist, sowie einer Rahmenkonstruktion für den Überstand und
- Fig. VIII: eine schematische Schnittdarstelhmg eines Verbundplatxenelementes mit einer wärmeisolierenden Trägerplatte welche eine Ausnehmung zur Aufnahme einer mit PCM-Wärmespeichermedium angereicherten Vergussmasse und des Kapillarrohrsystems aufweist.

### Ausführungsbeispiele:

### Ausführungsbeispiel 1:

Gemäß der Figur I besteht ein Verbundplattenelement für den Einsatz als Einlegerplatte in eine Tragkonstruktion für eine herabgehangene Deckenkonstruktion aus einer selbsttragenden Trägerplatte 1 aus wärmeisolierenden PU-Schaum. An dieser Trägerplatte ist vorderseitig eine zusätzliche Schicht 2 mittels Klebeverbindung fest angeordnet, wobei die Schicht 2 PCM-Wärmespeichermedium, beispielsweise in Form von PCM-Wachskügelchen, aufweist
Das PCM-Wärmespeichermedium (Phase Change Material), auch Latentwärmespeichermaterial genannt, hat die Eigenschaft, Wärme aufzunehmen und zu speichern und bei Erreichen einer bestimmten, durch den wählbaren PCM-Materialeinsatz voreinstellbaren Temperatur, die durch eine Aggregatszustandsänderung des Materials von einer Phase in eine andere , wieder abzugeben, ohne dass sich die Temperatur des Materials selbst verändert. Dadurch ist es möglich, naturbedingt auftretende Temperaturunterschiede von Tag- und Nachttemperatur bei der Raumklimatisierung passiv zu minimieren. Die Anordnung eines festen Verbundes 3 zwischen Trägerplatte 1 und Schicht 2 mit PCM integrierten Wärmespeichermedium in Form einer Klebeschicht hat den Vorteil, dass dadurch ein selbsttragendes Verbundplattenelement entsteht, welches als Einlegerplatte in eine herabgehängte Deckenkonstruktionsvorrichtung eingelegt werden kann. Durch die Anordnung der Schicht 2 mit dem integrierten PCM-Wärmespeichermedium vor der Trägerplatte 1, die zum Zwischenraum zwischen Raumdecke und der herbgehangenen Deckenkonstruktion angeordnet ist, erfolgt eine Abschirmung des PCM- Wärmespeichermediums. Dies erfolgt dadurch, dass der in dem geschaffenen Decken-Zwischenraum auftretenden Wärmestau durch die wärmeisolierte Trägerplatte 1 weitestgehend zurückgehalten wird und somit der Einfluss auf das Phasenwechselmaterial minimiert wird. Das Phasenwechselmaterial soll die Raumtemperaturwärme aufnehmen und speichern und bei Absenken der Raumtemperatur an diesen wieder abgeben.

### Ausführungsbeispiel 2:

Gemäß der Figur II besteht ein Verbundplattenelement für den Einsatz als Einlegerplatte in eine Tragkonstrukion für eine abzuhängende Deckenkonstruktion aus einer selbsttragenden Trägerplatte 1 aus wärmeisolierenden PU-Schaum und einer Schicht 2 mit dem integrierten PCM-Wärmespeichermedium. Zwischen beiden ist ein Kapillarrohrsystem 4 fest durch einen wärmeleitfähiger Verbund 3 angeordnet. Dies hat den Vorteil, dass die Kapillarrohre nicht isoliert werden und deren Wärmeleitfähigkeit durch diese Art der Verbindung nicht negativ beeinflusst wird.
Das Kapillarrohrsystem weist gleichzeitig Anschlusselemente für die Herstellung einer Verbindung zum Kapillarrohrsystem der benachbarten Einlegerplatte bzw. zum Versorgungssystem der Kapillarrohre auf.
Das Material der wärmeisolierende Trägerplatte 1 ist so ausgelegt, dass es durch den Einsatz zusätzlicher schallisolierender Materialien gleichzeitig auch Schallschutzeigenschaften aufweist.
Mit der Anordnung eines zusätzlichen Kapillarrohrsystems und der dadurch hergestellten Integration eines aktiven Kühl- bzw. Wätmesystems kann das "passive" System des PCM-Wärmespeichermediums aktiv unterstützt und beeinflusst werden.
Dadurch ist eine Möglichkeit geschaffen, die Vorteile des passiven PCM-Wärmespeichermediums auf individuelle Bedürfnis der Raumklimatisierung nutzen und einstellen zu können.

### Ausführungsbeispiel 3:

Entgegen dem Ausführungsbeispiel 2 weist das Verbundplattenelement gemäß der Figur III statt einer selbsttragenden Trägerplatte 1 aus wärmeisolierenden PU-Schaum eine rückseitige Schutzschicht 7 auf, wobei zwischen dieser und der Schicht 2 mit dem integrierten PCM-Wärmespeichermedium auch ein Kapillarrohrsystem 4 zum Leiten eines Kühl- und/oder Wärmemediums fest durch einen wärmeleitfähiger Verbund 3 angeordnet ist. Diese Schutzschicht 7 ist als selbsttragende Metallplatte ausgebildet und soll das nachträgliche Deformieren durch Verbiegen der Platte verhindern.

Zusätzlich zu dieser vorteilhaften Anordnung weist die Schicht 2 aus PCM-Wärmespeichermaterial zur Raumanordnung hin eine Sichtflächenausbildung 6 auf, so dass eine nachträgliche dekorative Gestaltung während oder nach der Montage als Deckenplattenelement entfallen kann.
Dieses Verbundplattenelement kann vorzugsweise in einer Deckenkonstruktion eingesetzt werden, wo kein Zwischenraum zwischen der vorhandenen Raumdecke und einer weiteren Deckenverkleidung angeordnet ist.

### Ausführungsbeispiel 4:

Gemäß der Figur IV besteht ein Verbundplattenelement für den Einsatz als stabiles selbsttragendes Kühlsegel, welches an einer vorhandenen Deckenkonstruktion zusätzlich unterhängig angeordnet ist, aus einer selbsttragenden Trägerplatte 1 aus wärmeisolierenden PU-Schaum und einer Schicht 2 mit dem integrierten PCM-Wärmespeichermedium. Zwischen beiden ist ein Kapillarrohrsystem 4 fest durch einen wärmeleitfähigen Verbund 3 angeordnet. Für die Anordnung der Anschlüsse 5 des Kapillarrohrsystems sind innerhalb der selbstragenden Trägerplatte 1 Verstärkungsprofile angeordnet. Diese dienen dazu, dass die Anordnung der Anschlusselemente 5 bei der Herstellung der Trägerplatte 1 exakt definiert und fixiert werden kann. Zur Vorbereitung der Montage des Verbundplattenelementes an der Decke sind an der rückseitigen Schutzschicht 7 Aufnahmevorrichtungen 8 für die Aufnahme von Befestigungselementen fest angeordnet. Die übrigen Bestandteile des Verbundplattenelementes sind analog des Ausführungsbeispiels 2 angeordnet. Mit diesem Verbundplattenelement wurde eine Lösung geschaffen, die es ermöglicht, die Vorteile der Kombination eines integrierten passiven Klimatisierungssystems und eines aktiven, das passive System manipulierende Wärmetauschersystems in einer nachträglich an einer eingebauten Deckenkonstruktion zu nutzen und damit eine effektive Klimatisierung des Raumes zu realisieren.

### Ausführungsbeispiel 5:

Zur Konstruktion einer nachträglich angeordneten Deckenkonstruktion zur effektiven Klimatisierung des Raumes weist gemäß Figur V das Verbundplattenelement eine selbsttragende Trägerplatte 1 aus wärmeisolierenden in sich stabilen Material mit gleichzeitig hohen Schallschutz und
Feuerschutzwerten auf, an welcher ein Kapillarrohrsystem 4 fest durch einen wärmeleitfähigen Klebeverbund 3 eingebettet angeordnet ist. Zur Raumseite hin angeordnet ist weiterhin eine Schicht 2 mit integriertem PCM-Wärmespeichermedium. Diese Schicht 2 bildet wenigstens an einer Verbundplattenseite einen Überstand 9 zu den beiden übrigen Anordnungen, Trägerplatte 1 und Kapillarrohrsystem 4, aus. Zur Stabilisierung dieses Überstandes 9 weist das Verbundplattenelement in diesem Randbereich eine Rahmenkonstruktion 10 aus stabilem Material, vorzugsweise Blech, auf. Die Rahmenkonstruktion erstreckt sich von der sichtseitig abgewandten Fläche des Überstandes 9 über den seitlichen und teilweise auch den oberen Randbereich der Trägerplatte 1. In den dadurch bei der Konstruktion einer Decke gebildeten Freiraum können vorzugsweise Anordnungen zur Befestigung an der Decke oder andere Konstruktionshilfen untergebracht und zur Befestigung der Verbundplattenelemente oder zur Unterbringung von Versorgungsleitungen genutzt werden.
Gemäß der Figur VI ist die Rahmenkonstruktion 10 zur Aufnahme von zusätzlichen Befestigungs- oder Versorgungseinrichtungen im Randbereich am Überstand 9 auf Stoß mit einer benachbarten Verbundplatte der nachträglich anzuordnenden Deckenkonstruktion über ein Verbindungsprofil mit dieser und mit der Decke verbunden. Diese Lösung bietet die Möglichkeit einer nachträglichen Konstruktion einer in sich geschlossenen dekorativen Raumdecke verbunden mit einer integrierten Möglichkeit der effektiven individuell gestaltbaren Raumklimatisierung.

### Ausführungsbeispiel 6:

GemäB der Figur VIII besteht das Verbundplattenelement aus einer Trägerplatte 1 mit einen einem zur Sichtfläche angeordneten Ausnehmung zur Aufnahme des Kapillarrohrsystems 4.
Das Kapillarrohrsystem ist mittels eine, sehr gute Wärmeleitfähigkeit aufweisenden Vergussmasse 12 als Verbund 3 in dieser Aufnahme der Trägerplatte 1 fest und gleichzeitig mit der Sichtflächenausbildung 6 fest verbunden angeordnet Das so ausgebildete Verbundplattenelement besitzt somit sehr gute Wärmeleiteigenschaften, welche einmal durch die Beschaffenheit der Vergussmasse als auch durch die Anordnung des Kapillarohrsystems in dieser wärmeleitenden und das Latentwärmespeichermaterial beinhaltenden Vergussmasse vorteilhaft unterstützt wird.

Gemäß der Figur VII wird als Sichtflächenausbildung 6 eine Schicht 2 aus PCM Wärmespeichermedium zusätzlich angeordnet, um das Verhalten des Verbundplattenelementes als Latentwärmespeicher weiterhin positiv zu verstärken. Unterstützt durch das im Kapillarrohrsystem geführte Medium zur Temperatursteuerung und der mit PCM-Material angereicherten Vergussmasse kann mit diesem Aufbau eines Verbundplattenelementes eine optimale Raumklimatisierung energieeffizient gestaltet werden.

### Bezugszeichenliste

- 1: Trägerplatte
- 2: Schicht aus PCM-Wärmespetchermedium
- 3: Verbund
- 4: Kapillarrohrsystem
- 5: Anschlusselemente für Kapillarrohrsystem
- 6: Sichtflächenausbildung
- 7: Rückseitige Schutzplatte
- 8: Aufnahmevorrchtung für Befestigungselemente
- 9: Überstand
- 10: Rahmenkonstruktion
- 11: Verstärkungsprofile
- 12: mit PCM-Latentwärmespeichermedium angereicherte Vergussmasse

## Patentansprüche

1. Vorgefertigtes Verbundplattenelement zum Klimatisieren von Räumen, bestehend aus einer Trägerplatte und einer ein PCM-Wärmespeichermedium aufweisenden Schicht, **dadurch gekennzeichnet, dass** die Trägerplatte (1) aus einem selbsttragenden Wärmeisoliermaterial besteht und zwischen dieser und der das PCM-Wärmespeichermedium aufweisenden über das Verbundelement durchgängig angeordneten Schicht (2) ein fester unlösbarer Verbund (3) besteht.

2. Vorgefertigtes Verbundplattenelement zum Klimatisieren von Räumen nach dem Anspruch 1, **dadurch gekennzeichnet, dass** zwischen der selbstragenden wärmeisolierenden Trägerplatte (1) und einer Schicht (2) mit integriertem PCM-Wärmespeichermedium ein Kapillarrohrsystem ((4) mit Anschlusselementen (5) für den Anschluss an das Versorgungsleitungssystems eines aktiven Kühlsystems angeordnet ist.

3. Vorgefertigtes Verbundplattenelement zum Klimatisieren von Räumen nach dem Anspruch 1, **dadurch gekennzeichnet, dass** die PCM-Wärmespeichermedium-Schicht (2) als Trägerplatte (1) ausgebildet ist an welcher ein Kapillarrohrsystem (4) mit Anschlusselementen (5) für den Anschluss an das Versorgungsleitungssystems fest verbunden angeordnet ist.

4. Vorgefertigtes Verbundplattenelement zum Klimatisieren von Räumen nach den Ansprüchen 1 bis 3, **dadurch gekennzeichnet, dass** das Verbundplattenelement Rastermaßgrößen einer Deckenplattenkonstruktion aufweist.

5. Vorgefertigtes Verbundplattenelement zum Klimatisieren von Räumen nach den Ansprüchen 1 bis 3, **dadurch gekennzeichnet, dass** das Verbundplattenelement individuelle MaBe einer Deckenkonstruktion oder einer Kühlsegelkonstruktion aufweist.

6. Vorgefertigtes Verbundplattenelement zum Klimatisieren von Räumen nach den Ansprüchen 1 bis 5, **dadurch gekennzeichnet, dass** am Verbundplattenelement rückseitig eine das Deformieren verhindernde Schutzplatte (7), vorzugsweise aus Metall, angeordnet ist.

7. Vorgefertigtes Verbundplattenelement zum Klimatisieren von Räumen nach den Ansprüchen 1 bis 6, **dadurch gekennzeichnet, dass** im Verbundplattenelement Verstärkungsprofile (11) für die Befestigung von Aufnahmevorrichtimgen (8) integriert sind, die für die Aufnahme der Montage-Befestigungselemente angeordnet sind.

8. Vorgefertigtes Verbundplattenelement zum Klimatisieren von Räumen nach den Ansprüchen 1 bis 6, **dadurch gekennzeichnet, dass** beim Verbundplattenelement zum Herstellen einer geschlossenen Deckenkonstruktion die Schicht (2) aus PCM-Wärmespeichermedium einen Überstand (9) zur dahinter angeordneten dämmenden Tragschicht (1) und/oder dem angeordneten Kapillarrohrsystem (4) bildet, welcher durch eine Rahmenkonstruktion (10) versteift ausgebildet ist.

9. Vorgefertigtes Verbundplattenelement zum Klimatisieren von Räumen nach den Ansprüchen 1 bis 8, **dadurch gekennzeichnet, dass** der feste Verbund zwischen isolierender Trägerplatte (1), der Schicht (2) mit PCM-Wärmespeichermedium, dem Kapillarrohrsystem (4), der Verstärkungsprofile (11), der versteifenden Rahmenkonstruktion (10) für den gebildeten Überstand (9) und/oder der zusätzlich angeordneten Schutzplatte (7) durch die Anordnung einer Klebeschicht (3) erfolgt.

10. Vorgefertigtes Verbundplattenelement zum Klimatisieren von Räumen nach den Ansprüchen 1 bis 8, **dadurch gekennzeichnet, dass** zwischen dem Kapillarrohrsystem (4) und der Schicht (2) mit PCM-Wärmespeichermedium eine Klebeschicht angeordnet ist und die Trägerplatte (1) daran und nachträglich mittels unter Druck durchgeführten Verschäumprozess angeordnet ist.

11. Vorgefertigtes Verbundplattenelement zum Klimatisieren von Räumen nach den Ansprüchen 1 bis 10, **dadurch gekennzeichnet, dass** als Verbund (3) eine Klebeschicht aus einem wärmeleitfähigen Kleber besteht.

12. Vorgefertigtes Verbundplattenelement zum Klimatisieren von Räumen nach den Ansprüchen 1 bis 10, **dadurch gekennzeichnet, dass** als Verbundschicht (3) eine das Kapillarrohrsystem (4) aufnehmende und mit PCM-Latentwärmespeichermedium angereicherte und ansonsten sehr gute Wärmeleiteigenschaften aufweisende Vergussmasse (12) angeordnet ist.

13. Vorgefertigtes Verbundplattenelement zum Klimatisieren von Räumen nach dem Anspruch 12, **dadurch gekennzeichnet, dass** die Vergussmasse (12) direkt hinter der Sichtflächenausbildung (6) angeordnet ist.

14. Vorgefertigtes Verbundplattenelement zum Klimatisieren von Räumen nach dem Anspruch 12, **dadurch gekennzeichnet, dass** die Vergussmasse (12) zwischen Trägerplatte (1) und der Schicht (2) aus PCM- Wärmespeichecmedium angeordnet ist.

15. Vorgefertigtes Verbundplattenelement zum Klimatisieren von Räumen nach den Ansprüchen 1 bis 12 und 14, **dadurch gekennzeichnet, dass** die PCM-Wärmespeichermedium-Schicht (2) an der der Kapillarrohranordnung (4) gegenüberliegenden Seite eine Sichtflächenausbildung (6) aufweist.
